Europäisches Patentamt

European Patent Office

Office européen des brevets

(11) Publication number: **0 103 379**
**B1**

# EUROPEAN PATENT SPECIFICATION

(45) Date of publication of patent specification: **11.06.86**

(21) Application number: **83304249.2**

(22) Date of filing: **21.07.83**

(51) Int. Cl.⁴: **C 11 B 11/00, D 01 C 3/00**

(54) **Method and apparatus for washing wool.**

(30) Priority: **21.07.82 ZA 825207**

(43) Date of publication of application:
**21.03.84 Bulletin 84/12**

(45) Publication of the grant of the patent:
**11.06.86 Bulletin 86/24**

(84) Designated Contracting States:
**AT BE CH DE FR GB IT LI LU NL SE**

(56) References cited:
**FR-A-2 295 920**
**FR-A-2 394 622**
**GB-A-2 065 630**

(73) Proprietor: **O.T.H. BEIER COMPANY (PTY) LTD.**
**P.O. Box 1039**
**Durban Natal (ZA)**
(73) Proprietor: **ALFA-LAVAL SEPARATION AB**
**Box 500**
**S-147 00 Tumba (SE)**

(72) Inventor: **Beier, Oscar Hermann Gunther**
**57 Hagarth Road**
**Kloof Natal (ZA)**
Inventor: **Kerf, Paul Joseph Barbe Julien**
**Bristol Road**
**Westville Natal (ZA)**
Inventor: **Ekegren, Sven**
**P.O. Box 500 S**
**14700 Tumba (SE)**

(74) Representative: **Frankland, Nigel Howard et al**
**FORRESTER & BOEHMERT Widenmayerstrasse
4/I**
**D-8000 München 22 (DE)**

EP 0 103 379 B1

Courier Press, Leamington Spa, England.

## Description

The present invention relates to a method and an apparatus for washing wool and in particular relates to a method, and an apparatus for carrying out the method, in which wax washed out of the wool is subsequently recovered in a substantially pure form.

A conventional plant for washing wool generally has a series of bowls in which the wool is washed. Typically in the first bowl the wool is washed with cold water to remove soluble matter from the wool, such as the so-called suint salts. Subsequently the wool is washed counter-currently with warm water to remove the wool wax and the various sludges. Subsequently the wool is commonly rinsed with cold water. Typically the sludge-containing water and the wax-containing water are separated and treated separately in appropriate decanters, centrifuges and sedimentation apparatus. The remaining water is evaporated off from the wax and sludge and may eventually be returned to the wool washing zone.

According to one aspect of this invention there is provided a method of washing wool comprising washing the wool with water a plurality of steps, wherein, the aqueous washings emanate from the washing step as three streams, which comprise a first wax-rich stream, a second sludge and wax containing stream and a third substantially wax-free sludge containing stream, wax from the two wax containing streams is recoverd and the supernatant liquor of those two streams is returned to the washing step, sludge is separated from the third stream and the supernatant liquor is purified by evaporation for re-use in the washing step.

Preferably the method comprises the step of treating the supernatant liquor of the third stream with a flow containing a high concentration of soluble salts to de-stabilize any wax-water emulsion present in that supernatant liquor.

Advantageously the said flow containing a high concentration of soluble salts is derived from or comprises the supernatant liquor resulting from the removal of wax and sludge from the said second sludge and wax containing stream.

Conveniently the first stream is decanted from a zone in which the wool is washed in warm water, the second stream is discharged from one or more outlets provided adjacent the bottom of the said zone and the third stream is discharged from a preliminary cold pre-washing of the wool and/or a final cold rinsing of the wool.

According to another aspect of this invention there is provided wool washing apparatus, said apparatus comprising a plurality of washing zones, means for introducing hot water to one or more of said washing zones, means for decanting a first wax rich stream from said zone or zones and means for discharging a second sludge and wax stream from outlets at or adjacent the bottom of said zone or zones, means for introducing cold water to one or more further zones for use as a pre-wash and/or final rinse zone or zones, the outlet of said pre-wash and/or final rinse zone or zones forming a third wax free sludge stream, and means for recovering wax from said first and second streams and for returning the supernatant liquor from said first and second streams to the washing zones.

Preferably the apparatus includes means for purifying at least part of the supernatant liquor recovered from said third stream by evaporation and means for introducing a flow containing the high concentration of soluble salts to the supernatant liquor that is to be purified by evaporation to destabilize any wax in water emulsion present in the liquor to be purified by evaporation.

Conveniently at least five washing zones are provided, hot water is supplied to flow counter currently through at least three of said washing zones, said counter current flow is decanted as said first stream and discharged as second stream, and cold water is directed to a preliminary pre-wash zone and a final rinsing zone, the outlets of these zones constituting said third stream.

Preferably means are provided for directing at least a portion of the supernatant liquor recovered from the second stream to a tank holding the supernatant liquor of the third stream that is to be purified by evaporation, and said recovered supernatant liquor stream contains said high concentration of soluble salts to destabilize any wax-in-water emulsion present in said tank.

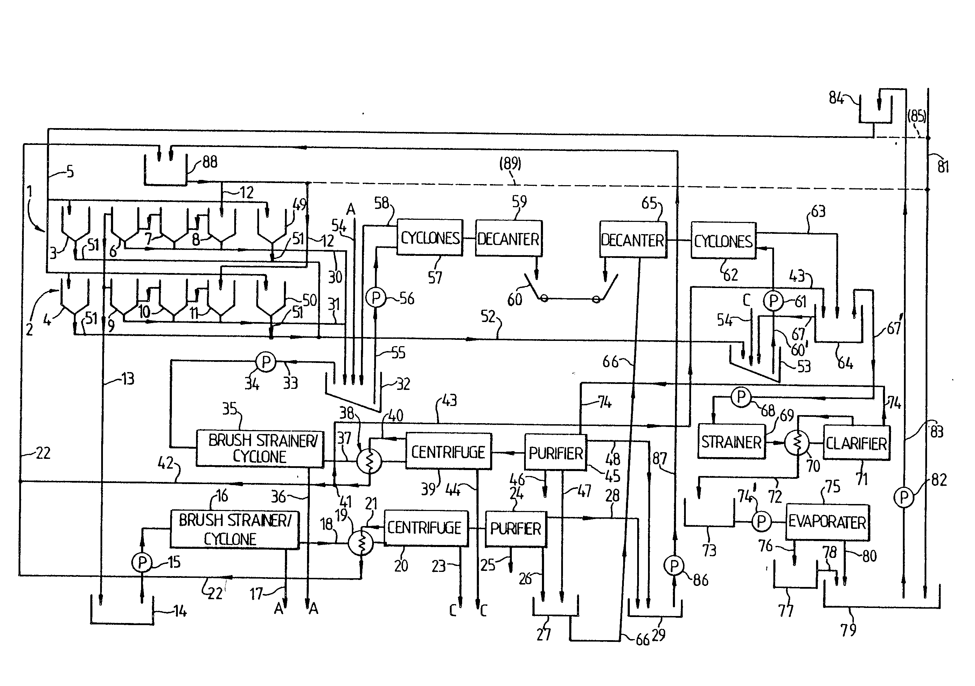

In order that the invention may be more readily understood, and so that further features thereof may be appreciated, the invention will now be described by way of example with reference to the accompanying drawing which is a diagrammatic flow sheet of an apparatus in accordance with the invention.

It is to be appreciated, at this stage that, in order to facilitate an understanding of the invention, the accompanying drawing is simplified in certain respects.

Referring now to the drawing the illustrated apparatus includes two parallel series 1, 2 of wash bowls. There are five bowls in each series. The first bowl 3, 4 of each series is a cold water steep bowl and cold water from a cold water supply pipe 5 is introduced to these bowls. The next three bowls in each series, 6—11 are for hot water washing in a counter current arrangement. Thus hot water is supplied to the bowls 8 and 11 through a hot water supply pipe 12, and the hot water is then passed sequentially through the bowls. A wax rich aqueous stream is extracted from the bowls 6 and 9, and flows through a pipe 13 to a wax stream collecting tank 14. There is only a minor amount of sludge in this stream.

The wax rich stream is then pumped by means of a pump 15 to a separation zone which commences with brush strainer/cyclone 16. The brush strainer/cyclone operates to produce a stream which is directed through pipe 17 containing a major part of any sludge present initially in the wax rich stream. This pipe 17 terminates with a reference letter A for reasons that will become apparent hereinafter. The remaining part of the material introduced to the brush strainer/cyclone passes through a pipe 18 to a heat exchanger 19 where the stream is heated. The heated stream is then introduced to a centrifuge 20. One output of the centrifuge 20 comprises a stream of hot water which flows through pipe 21, through the heat exchanger 19 and then through the pipe 22. A stream of sludge is also discharged by the centrifuge 20, the sludge passing through pipe 23 which is illustrated as terminating with the reference letter C for purposes which will become apparent hereinafter. A wax rich product passes from the centrifuge 20 to a purifier arrangement 24 in which the wax is purified. One output 25 of the purifier is a A grade wool wax. A sludge output from the purifier passes through the conduit 26 to a tank 27. Supernatant liquior from the purifier passes through conduit 28 to a storage tank 29.

Returning to the two series of bowls, 1, 2 it can be seen that the bowls 6, 7, and 8 are each provided with a lower outlet, the outlets being connected to a conduit 30 and similarly the bowls 9, 10 and 11 are provided with lower outlets connected to a conduit 31. The conduits 30 and 31 carry a wax-containing sludge stream and lead to a tank 32 which constitutes a tank for a wax-containing sludge 9. Thus it will be appreciated that the sludge in lines 30 and 31 contains a certain proportion of wax. A mixture consisting of an emulsion of wax and sludge is withdrawn from the tank 32 and is passed to a separation zone which is similar to the separation zone through line 33 that the wax rich stream in conduit 13 was introduced to. Thus the pump 34 pumps the wax-containing sludge to a brush strainer/cyclone 35. One output 36 of this brush strainer/cyclone is a discharge line for sludge. This discharge line is shown as terminating with a reference letter A for reasons that will become apparent hereinafter. An output from the brush strainer/cyclone which has a reduced sludge content passes through line 37 to a heat exchanger 38 in which the stream is heated. The heated stream then passes to a centrifuge 39. One outlet 40 of the centrifuge 39 constitutes the stream of hot supernatant liquor and this stream passes through the heat exchanger 38 to heat the stream that is being introduced to the centrifuge. After leaving the heat exchanger at a point 41 the stream of supernatant liquor splits, about two-thirds of the flow passes through the conduit 42 to join the flow present in previously described conduit 22, and the remaining one-third flows through the conduit 43 for purposes that will be described hereinafter.

A second outlet of the centrifuge 39 comprises a sludge stream which flows through the outlet 44 which is shown as terminating with the reference letter C for purposes that will be described hereinafter. A wax enriched flow passes from the centrifuge 39 to a purifier 45 where the wax is purified. One outlet 46 of the purifier constitutes a B grade wax. Another outlet of the purifier 47 comprises a flow of sludge that is directed to the tank 27 described above. The remaining outlet 48 of the purifier constitutes a stream of supernatant liquor which is directed to the tank 29, as described above.

Returning again to the series of bowls 1, 2 it can be seen that the final bowl in each series of bowls, namely bowls 49, 50 are provided with cold water from the cold water pipe 5. The bowls 3, 4 and 49, 50 have, at their lower end, outlet conduit 51 which are all connected to a common discharge conduit 52. The flow in this conduit constitutes a substantially wax-free sludge. The conduit 52 discharges into a tank 53.

In operation of the apparatus wool to be washed is effectively moved sequentially through the bowls of one series of bowls. Whilst the wool may be physically moved from one bowl and introduced to another bowl, and so on, it is to be appreciated that it is conceivable that a plurality of bowls may be provided and the interconnections between the bowls may be altered to provide the desired effect. Thus the wool is initially rinsed with cold water and is then counter currently washed with hot water in three effective situations and is finally rinsed again with cold water. The washings (that is to say the aqueous streams flowing from these washing and rinsing steps) constitute three streams, comprising a first substantially sludge-free wax stream which is directed to the tank 14, a second stream consisting of a sludge stream that does incorporate a proportion of wax that is directed to the tank 32, and a third stream comprising a sludge stream that is substantially wax free that is directed to the tank 53.

It is to be noted that the sludge leaving the brush strainer/cyclones 16 and 35 is introduced to the tank 32 through the conduit 54 which carries the reference letter A to show the effective connection between the conduits 17 and 36 and the conduit 54. Similarly the sludge discharged from the centrifuges 20 and 39 is introduced to the tank 53 through the conduit 54. The conduit 54 is marked with the reference letter C to show that the sludge flowing through conduits 23 and 44 is directed through conduit 54.

It is to be appreciated that the sludge will form a sediment in tank 32. A conduit 55 is thus provided which has an open lower end at the base of the tank 32. A pump 56 pumps a sludge rich stream up the conduit 55 and directs the stream into one or more cyclones 57. Supernatant liquor coming from the cyclones is directed through conduit 58 back into the tank 32. Sludge from the cyclones is transferred to a decanter 59, and the sludge may then be discharged from the decanter into a truck 60 or the like for subsequent disposal.

Similarly a sludge will form in the base of tank 53. Thus a conduit 60' is provided having an open end adjacent the base of tank 53 and a sludge rich stream is pumped by means of a pump 61 up the conduit 60 into one or more cyclones 62. Supernatant liquor from the cyclones is directed through a conduit 63 to a holding tank 64. Sludge from the cyclone 62 is transferred to a decanter 65 which decants the sludge into the truck 60, again for subsequent disposal.

Sludge from the tank 27 described above is passed through conduit 66 to the decanter 65 so that this sludge is also decanted into the truck for subsequent disposal.

The conduit 43, mentioned above, also discharges into the holding tank 64, and an overflow 67 from the tank 64 is directed into the tank 53.

It is to be appreciated that the flow in conduit 43 is derived from the supernatant liquor resulting from the removal of wax and sludge from the flow in the wax-containing sludge line. This supernatant liquor contains a high concentration of soluble salts. Thus these soluble salts are introduced both to the tank 64 and to the tank 53. This will serve to de-stabilize the wax-in-water emulsion that may be present, especially in tank 64.

The de-stabilized emulsion is extracted from tank 64 through conduit 67' and passes through a pump 68 to a strainer 69. The flow then passes to a heat exchanger 70 and then to a clarifier 71. The output from the clarifier 71 passes back through the heat exchanger 70 to heat the flow of material entering the clarifier. The flow, having passed through the heat exchanger continues through a conduit 72 to a holding tank 73. A wax containing fraction from the clarifier 71 may be led to the purifier 45 through conduit 74. Thus this wax fraction forms part of the eventual wax output through outlet 46.

The liquid present in holding tank 73 is pumped by means of a pump 74' to an evaporator 75. The evaporator 75 has a first condensate outlet 76 leading to a boiler hot well 77 whose overflow 78 leads to a clean water collecting tank 79. A second condensate outlet 80 from the evaporator 75 leads directly to the cold water collecting tank 79. Cooling tower bleed water may also be directed into the cold water collecting tank 79.

Any concentrate generated in the evaporator may be directed directly to one of the decanters 59 or 65.

The necessary amount of fresh water make-up enters the cold water collecting tank 79 through the conduit 81 which may be connected to a suitable supply of cold water. Clean water from the tank 79 may be pumped by a pump 82 up a conduit 83 into a header tank 84 which acts as a buffer tank. The cold water supply conduit 5, as mentioned above, is connected to the tank 84. If necessary the conduit 5 may be connected (85) directly to the inlet conduit 81. This may be necessary during start-up.

The warm supernatant liquors flowing through conduit 28 to 48 into tank 29 are pumped by means of a pump 86 through a conduit 87 to a hot water storage tank 88. The supernatant liquor in conduit 22 also discharges into this tank 88. The hot water supply conduit 12 emanates from the tank 88. The conduit 12 may be connected (89) to the main water inlet conduit 81 for use during start-up of the apparatus.

It is to be appreciated that various heaters may be provided at appropriate points in the above described apparatus, for example in the hot water storage tank 88, and in the inlet to centrifuges 20 and 39, and the inlet to clarifier 71, particularly for use when the operation of the apparatus is being initiated. Many pumps and control valves may be provided at positions determined by a man skilled in the art and many other modifications may be incorporated. The precise proportion of the flow containing the high concentration of soluble salts directed through conduit 43 into the tank 64 depends upon circumstances, but it has been found that typically a flow that is equal to one-third of the total flow in conduit 40 is approximately correct.

By separating the washings into three separate flows, namely a first wax-rich stream, a second sludge and wax stream and a third wax-free sludge the amount of water that has to be evaporated is minimized since the supernatant liquor from the wax flow and the wax sludge flow are effectively returned to the hot water reservoir 88 and are re-utilised without evaporation. It is only the liquor from the wax free sludge flow that must be evaporated, and this evaporation step is facilitated by the breakdown of any wax emulsion forming in the tank 64 by the addition of the flow containing a high concentration of soluble salts.

**Claims**

1. A method of washing wool comprising washing the wool with water in a plurality of steps, characterised in that the aqueous washings emanate from the washing step as three streams which comprise a first wax-rich stream, a second sludge and wax containing stream and a third substantially wax-free sludge containing stream, wax from the two wax containing streams is recovered and the supernatant liquor of those two streams is returned to the washing step, sludge from the third stream is separated and the supernatant liquor is purified by evaporation for re-use in the washing step.

2. A method according to claim 1 comprising the step of treating the supernatant liquor of the third stream with a flow containing a high concentration of soluble salts to de-stabilize any wax-water emulsion present in that supernatant liquor.

3. A method according to claim 2, wherein the said flow containing a high concentration of soluble salts is derived from or comprises the supernatant liquor resulting from the removal of wax and sludge from the said second sludge and wax containing stream.

4. A method according to any one of the preceding claims wherein the first stream is decanted from a zone in which the wool is washed in warm water, the second stream is discharged from one or more outlets provided adjacent the bottom of the said zone and the third stream is discharged from a preliminary cold pre-washing of the wool and/or a final cold rinsing of the wool.

5. A wool washing apparatus, said apparatus comprising a plurality of washing zones (6—11), means (12) for introducing hot water to one or more of said washing zones, characterised in that the apparatus comprises means (13) for decanting a first wax rich stream from said zone or zones and means (30) for discharging a second sludge and wax stream from outlets at or adjacent the bottom of said zone or zones, means (5) for introducing cold water to one or more further zones (3, 4) (49, 50) for use as a pre-wash and/or final rinse zone or zones, the outlet (51) of said pre-wash and/or final rinse zone or zones forming a third wax free sludge stream, and means (15—42, 44—48) for recovering wax from said first and second streams and for returning the supernatant liquor from said first and second streams to the washing zones.

6. An apparatus according to claim 5 including means for purifying at least part of the supernatant liquor recovered from said third stream by evaporation (75) and means (43) for introducing a flow containing the high concentration of soluble salts to the supernatant liquor that is to be purified by evaporation to de-stablize any wax in water emulsion present in the liquor to be purified by evaporation.

7. An apparatus according to claim 5 or 6 wherein at least five washing zones (3—4, 6—11, 49—50) are provided, hot water is supplied (12) to flow counter currently through at least three (6—11) of said washing zones, said counter current flow is decanted (13) as said first stream and discharged as second stream (30), and cold water (5) is directed to a preliminary pre-wash zone (3—5) and a final rinsing zone (49—50), the outlets of these zones constituting said third stream.

8. An apparatus according to claim 6 wherein means (43) are provided for directing at least a portion of the supernatent liquor recovered from the second stream to a tank (64) holding the supernatant liquor of the third stream that is to be purified by evaporation, and said recovered supernatant liquor stream contains said high concentration of soluble salts to destabilize any wax-in-water emulsion present in said tank.

**Patentansprüche**

1. Verfahren zum Waschen von Wolle unter Waschen der Wolle mit Wasser in einer Vielzahl von Schritten, dadurch gekennzeichnet, daß das von dem Waschen herrührende Waschwasser einen ersten wachsreichen Strom, einen zweiten Schmutz und Wachs beinhaltenden Strom und einen dritten, im wesentlichen wachsfreien, Schmutz beinhaltenden Strom aufweist, das Wachs von den beiden Wachs beinhaltenden Strömen gewonnen wird und die auf der Oberfläche dieser beiden Ströme aufliegende Schicht in den Waschvorgang zurückgegeben wird, der Schmutz von dem dritten Strom abgesondert wird und die auf der Oberfläche schwimmende Schicht durch Evaporation zur Wiederverwendung in dem Waschvorgang gereinigt wird.

2. Verfahren nach Anspruch 1, gekennzeichnet durch Behandeln der auf der Oberfläche schwimmenden Schicht des dritten Stromes mit einer eine hohe Konzentration lösbarer Salze enthaltenen Menge zur Destabilisierung etwaiger in der auf der Oberfläche schwimmenden Schicht vorhandener Wachs-Wasser-Emulsionen.

3. Verfahren nach Anspruch 2, wobei die eine hohe Konzentration lösbarer Salze enthaltende Menge von der auf der Oberfläche schwimmenden Schicht gewonnen worden ist oder diese beinhaltet, die sich bei der Entfernung des Wachses und des Schlamms aus dem zweiten Schmutz und Wachs beinhaltenden Stroms ergibt.

4. Verfahren nach einem der vorangehenden Ansprüche, wobei der erste Strom von einem Bereich abgeleitet wird, in dem die Wolle in warmem Wasser gewaschen wird, der zweite Strom durch einen oder mehrere Auslässe, die benachbart dem Boden dieser Zone angeordnet sind, abgelassen wird, und der dritte Strom bei einem vorangehenden kalten Vorwaschen der Wolle und/oder einem abschließenden kalten Spülen der Wolle gewonnen wird.

5. Vorrichtung zum Waschen von Wolle, mit einer Vielzahl von Waschbereichen (6—11), Mitteln (12) zum Einführen von heißem Wasser in eine oder mehrere der Wasserzonen, dadurch gekennzeichnet, daß die Vorrichtung Mittel (13) zum Ableiten eines ersten wachsreichen Stromes aus dem Bereich oder den Bereichen und Mittel (30) zum Abführen eines zweiten Schlamm- und Wachsstromes aus Auslässen an oder benachbart dem Boden dieser Zone oder Zonen, Mittel (5) zum Einführen von kaltem Wasser in eine oder mehrere weitere Zonen (3, 4) (49, 50) zur Verwendung als Vorwasch- und/oder Spülbereich öder -bereiche, wobei der Auslaß (51) des Vorwasch- und/oder Spülbereich oder -bereiche einen dritten wachsfreien Schmutzstrom bilden, und Mittel (15—42, 44—48) zum Wiedergewinnen des Wachses von dem ersten und dem zweiten Strom und zum Rückführen der auf der Oberfläche schwimmenden Schicht von dem ersten und dem zweiten Strom in die Waschbereiche aufweist.

6. Vorrichtung nach Anspruch 5, mit Mitteln zum Reinigen wenigstens eines Teiles der auf der Oberfläche schwimmenden, von dem dritten Strom durch Evaporation (75) gewonnenen auf der Oberfläche schwimmenden Schicht und Mittel (73) zum Einführen eines die hohe Konzentration von lösbaren Salzen beinhaltende Menge zu der auf der Oberfläche schwimmende Schicht, die durch Evaporations zu reinigen ist, um in der durch Evaporation zu reinigenden Schicht vorhandene Wachs-Wasser-Emulsion zu destabilisieren.

7. Vorrichtung nach Anspruch 5 oder 6, wobei wenigstens fünf Waschzonen (3—4, 6—11, 49, 50) vorgesehen sind, heißes Wasser durch wenigstens die letzten drei (6—11) der Waschbereiche gegenströmend fließend geliefert (12) wird, wobei der gegenströmende Fluß als erster Strom abgeleitet wird (13) und als zweiter Strom (30) abgeführt wird, und kaltes Wasser (5) in einen Vorwaschbereich (3—5) und einen Spülbereich (49, 50) gerichtet wird, wobei die Auslässe dieser Bereiche den dritten Strom bilden.

8. Vorrichtung nach Anspruch 6, wobei Mittel (43) zum Richten wenigstens eines Teiles der von dem zweiten Strom rückgewonnenen, auf der Oberfläche schwimmenden Schicht in einen Tank (64) vorgesehen sind, der die auf der Oberfläche schwimmende Schicht des dritten Stromes, der durch Evaporation zu reinigen ist, beinhaltet, wobei der Strom der wiedergewonnenen, auf der Oberfläche schwimmenden Schicht eine hohe Konzentration von lösbaren Salzen zur Destabilisierung einer in dem Tank vorhandenen Wachswasseremulsion beinhaltet.

## Revendications

1. Procédé de lavage de la laine, comprenant le lavage de la laine avec de l'eau en plusieurs étapes, caractérisé en ce que les eaux de lavage proviennent de l'étape de lavage sous forme de trois courants qui comprennent un premier courant riche en suintine, un second courant contenant des boues et de la suintine et un troisième courant contenant une boue pratiquement dépourvue de suintine, la suintine des deux courants en contenant est récupérée, et la liqueur qui surnage provenant de ces deux courants est renvoyée à l'étape de lavage, la boue du troisième courant est séparée et la liqueur qui surnage est purifiée par évaporation afin qu'elle soit réutilisée dans l'étape de lavage.

2. Procédé selon la revendication 1, comprenant l'étape de traitement de la liqueur qui surnage du troisième courant par un courant contenant une concentration élevée de sels solubles afin qu'une émulsion éventuelle de suintine et d'eau qui peut être présente dans cette liqueur qui surnage soit destabilisée.

3. Procédé selon la revendication 2, dans lequel le courant contenant une concentration élevée de sels solubles est tiré de la liqueur qui surnage obtenue après enlèvement de la suintine et de la boue du second courant contenant de la boue et de la suintine, ou est formé par cette liqueur qui surnage.

4. Procédé selon l'une quelconque des revendications précédentes, dans lequel le premier courant est décanté à partir d'une zone dans laquelle la laine est lavée à l'eau tiède, le second courant est évacué par une ou plusieurs sorties formées près du fond de cette zone, et le troisième courant est évacué d'un prélavage préliminaire à froid de la laine et/ou d'un rinçage final à froid de la laine.

5. Appareil de lavage de la laine, l'appareil comprenant plusieurs zones de lavage (6—11), un dispositif (12) d'introduction d'eau chaude dans une ou plusieurs des zones de lavage, caractérisé en ce que l'appareil comporte un dispositif (13) de décantation d'un premier courant riche en suintine, provenant d'une ou plusieurs zones, et un dispositif (30) d'évacuation d'un second courant de boue et de suintine à partir de sorties placées au fond de la zone ou des zones ou près de ce fond, un dispositif (5) d'introduction d'eau froide dans une ou plusieurs zones supplémentaires (3, 4) (49, 50) afin qu'elles soient utlisées sous forme d'une ou plusieurs zones de prélavage et/ou de rinçage final, la sortie (51) de la zone ou des zones de prélavage et/ou de rinçage final formant un troisième courant de boue dépourvu de suintine, et un dispositif (15—42, 44—48) destiné à séparer la suintine du premier et du second courant et à renvoyer les liqueurs qui surnagent du premier et du second courant vers les zones de lavage.

6. Appareil selon la revendication 5, comprenant un dispositif de purification d'une partie au moins de la liqueur qui surnage retirée du troisième courant par évaporation (75) et un dispositif (43) destiné à introduire un courant contenant la concentration élevée de sels solubles dans la liqueur qui surnage qui doit être purifiée par évaporation afin qu'une émulsion de suintine dans l'eau éventuellement présente dans la liqueur à purifier par évaporation soit destabilisée.

7. Appareil selon l'une des revendications 5 et 6, dans lequel sont formés au moins cinq zones de lavage (3—4, 6—11, 49—50), de l'eau chaude est transmise (12) à contre-courant dans au moins trois des zones de lavage (6—11), le contre-courant est décanté (13) sous forme du premier courant et est évacué sous forme du second courant (30), et de l'eau froide (5) est dirigée vers une zone préliminaire de prélavage (3—5) et une zone de rinçage final (49—50), les sorties de ces zones formant le troisième courant.

8. Appareil selon la revendication 6, dans lequel un dispositif (43) est destiné à diriger une partie au moins de la liqueur qui surnage séparée du second courant vers un réservoir (64) contenant la liqueur qui surnage du troisième courant qui doit être purifié par évaporation, et le courant séparé de liqueur qui surnage contient la concentration élevée de sels solubles, destinée à destabiliser une émulsion de suintine dans l'eau éventuellement présente dans le réservoir.